# EUROPEAN PATENT APPLICATION

(11) **EP 1 202 192 A1**
(43) Date of publication of application: **02.05.2002**
(21) Application number: 99953984.4
(22) Date of filing: 25.10.1999
(51) Int. Cl.: G06F 17/30

(54) **MULTIPLE TELECOMMUNICATIONS MACHINE FOR COMMON, PUBLIC AND/OR PRIVATE USE**

(30) Priority: 14.05.1999 ES 9901352 U
(71) Applicant: Socias Gili, Monica, 08950 Esplugues de Llobregat (ES)
(72) Inventor: Socias Gili, Monica, 08950 Esplugues de Llobregat (ES)
(74) Representative: Aragones Forner, Rafael Angel
(86) International application number: ES9900342
(87) International publication number: WO0070499

(57) **Abstract**

The object of the invention is a machine for multiple telecommunications for common, public and/or private use.

This machine allows to carry out functions such as to send, receive and look up electronic mail, carry out video conferencing and video messaging, and to print the electronic mails, all this being feasible from any place where the machine might be installed, i.e. from any public place such as squares, airports, railway stations, etc., and/or from any private place such as offices, bureaus, shops, etc.

## Description

The present invention has as its object a machine for multiple telecommunications for common, public and/or private use.

The fast tempo being imposed nowadays by the professional activity, etc. compels people to rely on communication systems based on automatic answering machines, electronic mail, voice mailboxes, etc. All of these systems are personal and untransferable, there not being a global telecommunications system for common use in public or private places. Another problem is the high cost of moving the present conventional mail whose present distribution system is totally manual.

The above-mentioned drawbacks have been totally obviated by means of the machine for multiple telecommunications for common, public and/or private use being the object of the present invention.

The machine being the object of the present invention allows to on the one hand send, receive and look up a user's electronic mail with the corresponding electronic mail address, and to on the other hand carry out video conferencing and/or video messaging (allowing to send, receive and look up and to use many types of media), all this being feasible from any public and/or private place where the machine of the invention might be installed, for such a purpose it being possible to choose any location such as a square, a gas station, a road or highway service station, train, tube or bus stations, etc., and of course office buildings and specific offices.

According to what has been set forth above the machine for multiple telecommunications for common, public and/or private use being the object of the present invention is essentially characterized in that it comprises:
- electronic mail telecommunication means; and
- video conferencing and/or video messaging telecommunication means;
wherein
the electronic mail means comprise:
- control means provided to send electronic mail and print it at the final destination;
- control means provided to collect electronic mail;
- control means provided to look up electronic mail;
wherein
the control means provided to send electronic mail comprise:
- means provided to make up the text of the electronic mail, with a display allowing to view and correct it;
- means provided to print the text of the electronic mail;
- means provided to send the electronic mail;
the control means provided to send, collect and look up the electronic mail comprising corresponding control pushbuttons;
and wherein
the video conferencing and/or video messaging means comprise:
- control means provided to carry out the video conferencing and/or video messaging;
- camera means provided to take and send the image of the sending user to the receiving user involved in the video conferencing and/or video messaging;
- display means provided to enable the sending user to receive the image of the receiving user involved in the video conferencing and/or video messaging;
- control means provided to record the video teleconference and/or video message on a data medium;
- control means provided to transfer the video teleconference and/or video message from the data medium to another medium of a domestic type such as VHS or the like;
- control means provided to send the video message;
- control means provided to look up the video message;
- control means provided to collect a video message;
   the control means provided to carry out the video conferencing and/or video messaging comprising the corresponding control pushbuttons;
   in combination with
- computer processing means;
- telephonic means;
- payment means provided to enable the user to pay for their use, and
- secondary display means allowing the sending user to view him- or herself while carrying out a video teleconference and/or a video message
   to thus allow to establish said telecommunications; said arrangement allowing to carry out all sorts of telecommunications to thus communicate with all sorts of users in any public and/or private place.

According to the present invention the means provided to make up the electronic mail are carried out by means of a keyboard and/or writing means; whereas the means provided to print the electronic mail are carried out to allow to use paper in the conventional way and/or selfenvelopable paper.

According to the invention the means provided to collect the video teleconference and/or video message are of any VHS conventional type and the like, by means of the corresponding access slots for input/output.

According to the invention the payment means provided to allow the user to pay for the use of the machine are of a conventional type by means of credit card and/or coins, with change outlet. The invention can also incorporate accessory means such as a telephone line and/or satellite system tap, a lighting current tap and/or solar plates and the like. The machine itself can likewise vend the data media of domestic types such as VHS tapes, DVD and the like to enable the user to collect the video teleconference and/or the video message. The machine can likewise incorporate a fax unit and/or image scanner.

The invention foresees that the plurality of components can be arranged in a receptacle for their protection provided with access door allowing to control and check them. Said receptacle can be arranged in a cabin for public and/or private use.

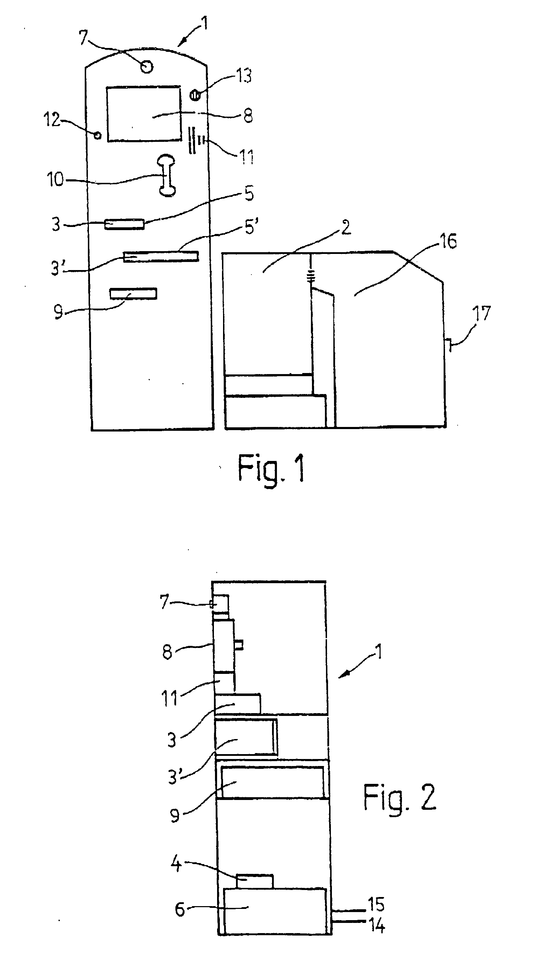

## Claims

1. A machine for multiple telecommunications for common, public and/or private use, **characterized in that** it comprises:
- electronic mail telecommunication means; and
- video conferencing and/or video messaging telecommunication means;
wherein
the electronic mail means comprise:
- control means provided to send electronic mail and print it at the final destination;
- control means provided to collect electronic mail;
- control means provided to look up electronic mail;
wherein
the control means provided to send electronic mail comprise:
• means provided to make up the text of the electronic mail, with a display allowing to view and correct it;
• means provided to print the text of the electronic mail;
• means provided to send the electronic mail;
the control means provided to send, collect and look up the electronic mail comprising corresponding control pushbuttons;
and wherein
the video conferencing and/or video messaging means comprise:
- control means provided to carry out the video conferencing and/or video messaging;
- camera means provided to take and send the image of the sending user to the receiving user involved in the video conferencing and/or video messaging;
- display means provided to enable the sending user to receive the image of the receiving user involved in the video conferencing and/or video messaging;
- control means provided to record the video teleconference and/or video message on a data medium;
- control means provided to transfer the video teleconference and/or video message from the data medium to another medium of a domestic type such as VHS and the like;
- control means provided to hold the video teleconference;
- control means provided to send the video message;
- control means provided to look up the video message;
- control means provided to collect a video message;
the control means provided to carry out the video conferencing and/or video messaging comprising the corresponding control pushbuttons;
in combination with
- computer processing means;
- telephonic means;
- payment means provided to enable the user to pay for their use, and
- secondary display means allowing the sending user to view him- or herself while carrying out a video teleconference and/or a video message
to thus allow to establish said telecommunications; said arrangement allowing to carry out all sorts of telecommunications to thus communicate with all sorts of users in any public and/or private place.

2. A machine for multiple telecommunications for common, public and/or private use as per claim 1, **characterized in that** the means provided to make up the electronic mail are carried out by means of a keyboard and/or writing means; and **in that** the means provided to print the electronic mail are carried out to allow to use paper in the conventional way and/or selfenvelopable paper.

3. A machine for multiple telecommunications for common, public and/or private use as per claim 1, **characterized in that** the means provided to collect the video teleconference and/or video message are of any VHS conventional type and the like, by means of the corresponding access slots for input/output.

4. A machine for multiple telecommunications for common, public and/or private use as per claim 1, **characterized in that** the payment means provided to allow the user to pay for the use of the machine are of a conventional type by means of credit card and/or coins, with change outlet.

5. A machine for multiple telecommunications for common, public and/or private use as per claim 1, **characterized in that** it incorporates accessory means such as a telephone line and/or satellite system tap, a lighting current tap and/or solar plates and the like.

6. A machine for multiple telecommunications for common, public and/or private use as per claim 1, **characterized in that** it comprises a storage of precited media for domestic use allowing to vend said media to the users.

7. A machine for multiple telecommunications for common, public and/or private use as per claim 1, **characterized in that** it incorporates a fax unit and/or image scanner.

8. A machine for multiple telecommunications for common, public and/or private use as per the foregoing claims, **characterized in that** the plurality of components are arranged in a receptacle for their protection provided with access door allowing to control and check them.

9. A machine for multiple telecommunications for common, public and/or private use as per claim 8, **characterized in that** said receptacle is arranged in a cabin for public and/or private use.
